# EUROPÄISCHE PATENTSCHRIFT

(11) **EP 2 079 942 B1**
(45) Veröffentlichungstag und Bekanntmachung des Hinweises auf die Patenterteilung: **29.12.2010**
(21) Anmeldenummer: 07817746.6
(22) Anmeldetag: 30.10.2007
(51) Int. Cl.: F16H 57/08, F03D 11/02, F16C 19/38, F16C 19/54, F16C 21/00, F16C 23/00

(54) **LAGERANORDNUNG ZUR DREHBAREN LAGERUNG EINES PLANETENRADES AUF EINEM PLANETENTRÄGER**
BEARING ARRANGEMENT FOR THE ROTATABLE MOUNTING OF A PLANET GEAR ON A PLANET CARRIER
ENSEMBLE DE PALIER POUR LE MONTAGE À ROTATION D'UN PIGNON SATELLITE SUR UN PORTE-SATELLITES

(30) Priorität: 03.11.2006 DE 102006051817
(43) Veröffentlichungstag der Anmeldung: 22.07.2009
(73) Patentinhaber: Schaeffler KG, 91074 Herzogenaurach (DE)
(72) Erfinder: LÖSCHNER, Tim, 97072 Würzburg (DE)
(86) Internationale Anmeldenummer: PCT/DE2007/001949
(87) Internationale Veröffentlichungsnummer: WO 2008/052525

(56) Entgegenhaltungen:
- EP-B1- 1 252 442
- WO-A-03/002891
- DE-A1- 10 311 851
- JP-A- 2006 029 475
- US-A- 1 843 293

## Beschreibung

### Gebiet der Erfindung

Die Erfindung betrifft eine Lageranordnung zur drehbaren Lagerung eines Planetenrades auf einem Planetenträger, mit zwei mit axialem Abstand zueinander angeordneten Kegelrollenlagern wobei zwischen den Kegelrollenlagern mindestens ein Radiallager angeordnet ist, wobei das mindestens eine Radiallager ein Zylinderrollenlager, ein Nadellager oder ein Kugellager ist.

Die US 1843293 und die JP 2006-29475A offenbaren jeweils eine Lageranordnung nach dem Oberbegriff des Anspruchs 1.

### Hintergrund der Erfindung

Planetenradgetriebe werden zunehmend bei Anwendungen eingesetzt, bei denen hohe Kräfte und Drehmomente übertragen werden und gleichzeitig ein möglichst geringes Konstruktions- bzw. Getriebegewicht gefordert wird. Eine typische Anwendung für derartige Planetenradgetriebe sind Getriebe für Windkraftanlagen. Auf diese wirken während deren Betrieb sehr große, zum Teil auch unzureichend bekannte Kräfte und Drehmomente. Da diese Getriebe an der Spitze hoher Türme angeordnet sind, die häufig starken, wech selnden Winden und Betriebslasten ausgesetzt sind, ist hier eine Gewichtsreduzierung der Getriebe von besonderer Bedeutung, da damit auch die Festigkeitsanforderungen an einen solchen Turm bzw. Rotormast verringert werden.

Aus der EP 1 252 442 B1 ist bereits eine Lageranordnung bekannt, bei der die Lagerung eines Planetenrades auf dem zugeordneten Planetenträger über zwei mit Abstand zueinander angeordnete Kegelrollenlager erfolgt. Der Abstand der Kegelrollenlager zueinander ergibt sich bei einer konstruktiven Auslegung aus den vom Planetenrad auf dem Planetenträger übertragenen Biegemomenten. Zwischen den Kegelrollenlagern verbleibt ein ungenutzter Raum, welcher zur Tragfähigkeit des Getriebes nichts beiträgt, den erforderlichen Bauraum jedoch vergrößert.

### Aufgabe der Erfindung

Der Erfindung liegt die Aufgabe zugrunde, eine Lageranordnung der im Oberbegriff des Anspruchs 1 genannten Art zu schaffen, bei der der durch vorgegebene Lastannahmen bestimmte Bauraum optimal im Sinne einer höchstmöglichen Tragfähigkeit der Lageranordnung ausgenutzt wird.

### Zusammenfassung der Erfindung

Dem Oberbegriff des Anspruchs 1 liegt die Erkenntnis zugrunde, dass der Raum zwischen den beiden Kegelrollenlagern für eine Unterbringung weiterer Lagerelemente genutzt werden kann, um so die Tragfähigkeit der Lageranordnung ohne eine Vergrößerung des Bauraumes zu erhöhen.

Des Oberbegriff des Anspruchs 1 geht daher aus von einer Lageranordnung zur drehbaren Lagerung eines Planetenrades auf einem Planetenträger, mit zwei mit axialem Abstand zueinander angeordneten Kegelrollenlagern. Dabei ist vorgesehen, dass zwischen den Kegelrollenlagern ein oder mehrere Radiallager angeordnet ist oder sind.

Durch eine Kombination von zwei Kegelrollenlagern und einem oder mehreren axial dazwischen angeordneten Radiallagern wird der verfügbare Bauraum im Getriebe optimal genutzt und die Tragfähigkeit bzw. die Tragzahl der Lageranordnung erhöht. Da das oder die Radiallager die Kegelrollenlager entlastet bzw. entlasten, werden deren Lebensdauer und damit die Lebensdauer der gesamten Lageranordnung verbessert. Die Kegelrollenlager verhindern grundsätzlich ein Verkippen des Planetenrades auf dem Planetenträger und damit eine Verringerung der Lebensdauer dieser Lager. Das oder die Radiallager nimmt bzw. nehmen zusätzlich Kräfte auf, die ansonsten die Kegelrollenlager belasten würden.

Gemäß Anspruch 2 ist vorgesehen, dass ein Radiallager den axialen Zwischenraum zwischen den Kegelrollenlagern, der im Wesentlichen durch die auf den Planetenträger wirkenden Biegemomente bestimmt ist, ausfüllt, den vorhandenen, konstruktiv bedingten Bauraum also weitestgehend ausnutzt.

Bei der konstruktiven Ausgestaltung der Erfindung nach Anspruch 3 ist vorgesehen, dass die Kegelrollenlager so ausgebildet und angeordnet sind, dass sich die Drehachsen der Kegelrollen zwischen den Kegelrollenlagern und radial innerhalb der Laufbahnen der Kegelrollen schneiden, wie anhand eines Ausführungsbeispieles noch im Einzelnen dargelegt wird.

Ein Radiallager ist gemäß einer Ausgestaltung der Erfindung als Zylinderrollenlager ausgebildet. Zylinderrollenlager sind einfache und bewährte Lager, die in unterschiedlichen Abmessungen und für unterschiedliche Belastungen marktüblich und damit preiswert erhältlich sind.

Andere Ausgestaltungen der Erfindung sehen vor, dass das Radiallager als Nadellager oder als Kugellager ausgebildet ist.

Um eine gleichmäßige Lastverteilung über die mindestens drei Lagerreihen zu erreichen, stehen verschiedene Verfahren oder Vorrichtungen zur Verfügung. Falls das oder die Radiallager als Wälzlager ausgebildet ist bzw. sind, können die Wälzkörper sortiert, also alle Wälzkörper eines Lagers so zusammengestellt werden, dass ein über den Umfang gleichmäßiges Tragbild entsteht.

Gemäß der Erfindung ist nun vorgesehen, dass der innere Lagerring eines Radiallagers hinsichtlich des Lagerspiels bzw. der Lagervorspannung einstellbar ist. Dazu ist beispielsweise die Innenfläche des Innenringes des Radiallagers konisch ausgebildet und sitzt auf einer axial verschiebbaren Hülse mit einer komplementär konischen Außenfläche. Durch axiales Verschieben der Hülse lässt sich der Innenring des Radiallagers radial aufweiten und damit das Lagerspiel bzw. die Lagervorspannung einstellen.

Eine andere Ausgestaltung sieht vor, dass der Innenring des Radiallagers auf einem drehbaren Exzenterring sitzt. Durch Verdrehen des Exzenterringes lässt sich die Exzentrizität des Radiallagers in Umfangsrichtung verstellen und so das Radiallager gegen die Kegelrollenlager verspannen.

Zudem kann vorteilhaft sein, dass an dem Planetenrad ein radial nach innen weisender Ringssteg ausgebildet ist, dessen radial nach innen weisende Mantelfläche sich auf der radial äußeren Mantelfläche des Außenringes des Radiallagers abstützt.

Um die Montage zu erleichtern und die Kosten der Lageranordnung zu verringern, ist gemäß einer weiteren Ausgestaltung der Erfindung vorgesehen, dass die beiden Kegelrollenlager und das oder die Radiallager einen gemeinsamen Außenring haben.

Eine Lageranordnung gemäß der Erfindung ist sehr vorteilhaft als Bestandteil einer Planetengetriebestufe einer Windturbinengetriebeanordnung verwendbar und demgemäß ausgebildet.

### Kurze Beschreibung der Zeichnungen

Die Erfindung wird im Folgenden anhand der beiliegenden Zeichnung an einigen Ausführungsformen näher erläutert. Darin zeigt
- Fig. 1: schematisch einen Längsschnitt durch eine Lageranordnung mit zwei Kegelrollenlagern und einem Zylinderrollenlager,
- Fig. 2: schematisch einen Teillängsschnitt durch eine Lageranordnung mit zwei Kegelrollenlagern und einem Zylinderrollenlager sowie mit ei- nem für alle drei Lager gemeinsamen Außenring,
- Fig. 3: eine Anordnung ähnlich der in Fig. 2, mit einer Einrichtung zur Ein- stellung des Lagerspiels des Zylinderrollenlagers, und
- Fig. 4: einen Querschnitt durch eine Lageranordnung mit einer Einrichtung zur Verstellung des Exzentrizität.

### Detaillierte Beschreibung der Zeichnungen

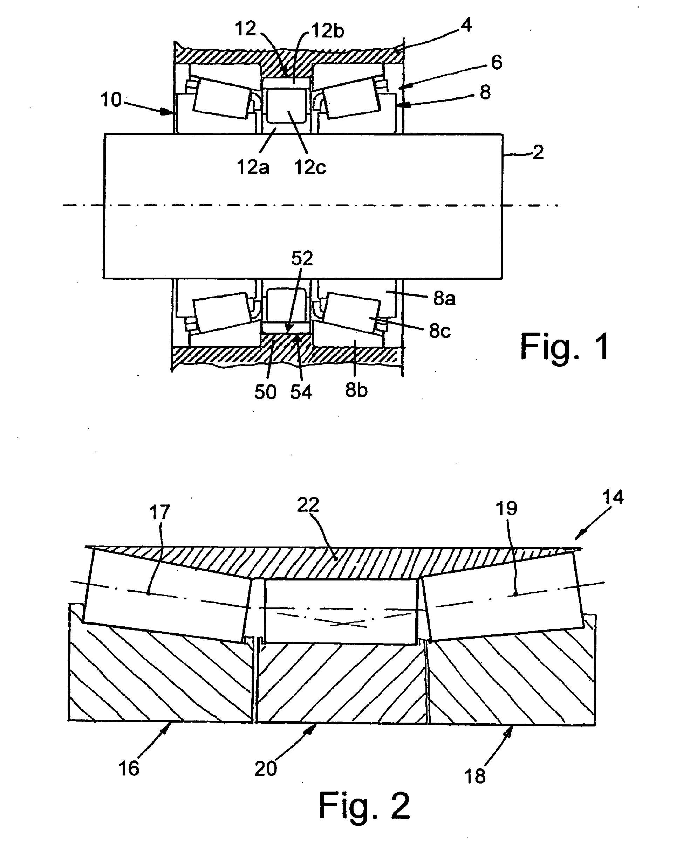

Die Fig. 1 zeigt einen Planetenträger 2, auf dem ein Planetenrad 4 über eine spezielle Lageranordnung 6 drehbar gelagert ist. Die Lageranordnung 6 umfasst zwei mit einem axialen Abstand zueinander angeordnete Kegelrollenlager 8 bzw. 10 mit kegeligen Wälzkörpern 8c und ein zwischen den Kegelrollenlagern 8, 10 angeordnetes Radiallager 12. Das Radiallager 12 ist im Falle der Fig. 1 als Zylinderrollenlager ausgebildet und verfügt über einen Innenring 12a, einen Außenring 12b und dazwischen angeordnete zylindrische Wälzkörper 12c. Wie die Fig. 1 erkennen lässt, füllt das Radiallager 12 im Wesentlichen den gesamten zwischen den Kegelrollenlagern 8, 10 verbleibenden Raum aus. Es handelt sich bei den Kegelrollenlagern 8, 10 und dem Radiallager 12 jeweils um autonome Lager, bei denen jedes dieser Lager mit einem eigenen inneren Lagerring 8a, 12a und einem eigenen äußeren Lagerring 8b, 12b ausgestattet ist, wie sich aus der Fig. 1 unmittelbar ergibt.

Vorteilhaft ist an dem Planetenrad 4 ein radial nach innen weisender Ringssteg 50 ausgebildet, dessen radial nach innen weisende Mantelfläche 52 sich auf der radial äußeren Mantelfläche 54 des Außenringes 13 des Radiallagers 12 abstützt.

Fig. 2 zeigt einen Teillängsschnitt durch eine Lageranordnung 14, die wie im Beispiel der Fig. 1 zwei Kegelrollenlager 16 bzw. 18 sowie ein dazwischen angeordnetes, als Zylinderrollenlager ausgebildetes Radiallager 20 umfasst. Im Gegensatz zu der in Fig. 1 dargestellten Lageranordnung haben diese drei Lager 16, 18, 20 einen gemeinsamen Außenring 22, welches insbesondere die Montage der Lageranordnung vereinfacht. Wie weiter aus Fig. 2 zu erkennen ist, schneiden sich die Drehachsen 17 und 19 der Kegelrollen zwischen den Kegelrollenlagern 16 und 18 sowie radial innerhalb der ideellen Laufbahnen der Kegelrollen (d.h. der Bewegungsbahnen der Drehachsen 17, 19).

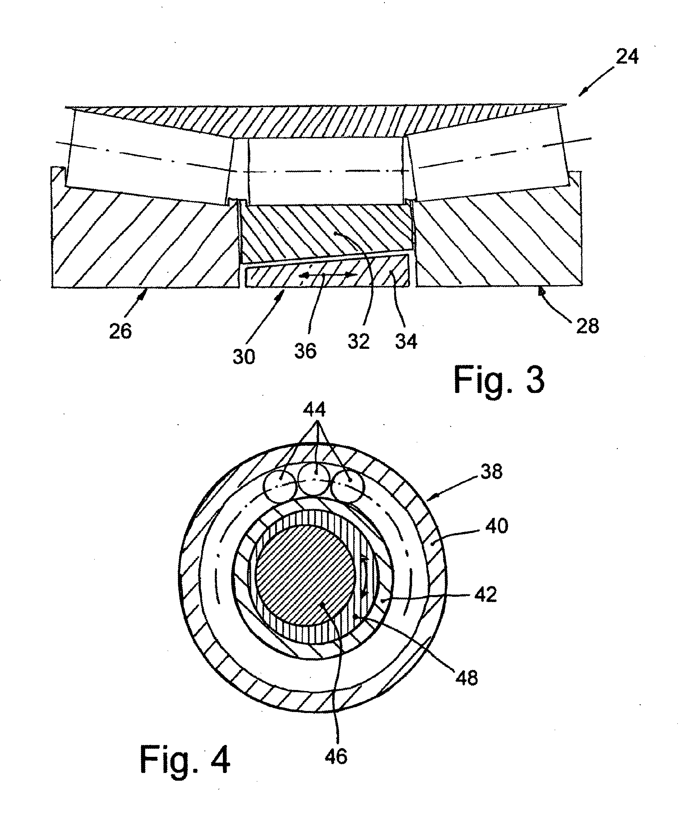

Fig. 3 zeigt eine Lageranordnung 24 ähnlich der in Fig. 2 mit zwei Kegelrollenlagern 26 und 28 sowie einem zwischen diesen angeordneten, als Zylinderrollenlager ausgebildeten Radiallager 30. Um eine gleichmäßige Lastverteilung über die drei Lagerreihen zu erreichen, ist der innere Lagerring 32 des Radiallagers 30 auf einer in Richtung des Pfeils 36 (Axialrichtung) verschiebbaren konischen Hülse 34 montiert. Durch Verschieben der konischen Hülse 34 kann der innere Lagerring 32 mehr oder weniger aufgeweitet und damit das Spiel des Radiallagers 30 bzw. dessen Vorspannung eingestellt werden.

Fig. 4 zeigt einen Querschnitt durch ein zwischen zwei Kegelrollenlagern angeordnetes Zylinderrollenlager 38 mit einem Außenring 40, einem Innenring 42, zwischen dem Außenring und dem Innenring angeordneten Zylinderrollen 44 und einen Planetenträger 46. Zwischen dem Planetenträger 46 und dem Innenring 42 ist ein auf dem Planetenträger 46 drehbarer Exzenterring 48 angeordnet, durch dessen Verdrehung die Exzentrizität des Radiallagers 38 gegenüber dem Planetenträger 46 in Umfangsrichtung verstellt und damit das Radiallager 38 gegenüber den Kegelrollenlagern verspannt werden kann.

### Bezugszeichenliste

- 2: Planetenträger
- 4: Planetenrad
- 6: Lageranordnung
- 8: Kegelrollenlager
- 8a: Innenring eines Kegelrollenlagers
- 8b: Außenring eines Kegelrollenlagers
- 8c: Wälzkörper eines Kegelrollenlagers
- 10: Kegelrollenlager
- 12: Radiallager
- 12a: Innenring des Radiallagers
- 12b: Außenring des Radiallagers
- 12c: Wälzkörper des Radiallagers
- 14: Lageranordnung
- 16: Kegelrollenlager
- 17: Drehachse der Kegelrollen von 16
- 18: Kegelrollenlager
- 19: Drehachse der Kegelrollen von 18
- 20: Radiallager
- 22: Außenring
- 24: Kegelrollenlager
- 28: Kegelrollenlager
- 30: Radiallager
- 32: Innerer Lagerring
- 34: Konische Hülse
- 36: Pfeil
- 38: Zylinderrollenlager
- 40: Außenring
- 42: Innenring
- 44: Zylinderrollen
- 46: Planetenträger
- 48: Exzenterring
- 50: Ringsteg des Planetenrades
- 52: Mantelfläche des Ringstegs
- 54: Mantelfläche des Außenrings des Radiallagers

## Patentansprüche

1. Lageranordnung zur drehbaren Lagerung eines Planetenrades (4) auf einem Planetenträger (2), mit zwei mit axialem Abstand zueinander angeordneten Kegelrollenlagern (8, 10), wobei zwischen den Kegelrollenlagem (8, 10) mindestens ein Radiallager (12) angeordnet ist, wobei das mindestens eine Radiallager (12) ein Zylinderrollenlager, ein Nadellager oder ein Kugellager ist, **dadurch gekennzeichnet, dass** der innere Lagerring (32) des Radiallagers (30) hinsichtlich des Lagerspiels bzw. der Lagervorspannung einstellbar ist.

2. Lageranordnung nach Anspruch 1, **dadurch gekennzeichnet, dass** das mindestens eine Radiallager (12) oder die mehreren Radiallager (12) den axialen Zwischenraum zwischen den Kegelrollenlagern (8, 10) zumindest weitgehend ausfüllt bzw. ausfüllen.

3. Lageranordnung nach Anspruch 1 oder 2, **dadurch gekennzeichnet, dass** die Kegelrollenlager (8, 10) so ausgebildet und angeordnet sind, dass sich die Drehachsen (17, 19) der Kegelrollen zwischen den Kegelrollenlagern (8, 10) und radial innerhalb der Laufbahnen der Kegelrollen schneiden.

4. Lageranordnung nach einem der Ansprüche 1 bis 3, **dadurch gekennzeichnet, dass** die Innenfläche des Innenringes (32) des Radiallagers (30) konisch ausgebildet ist und auf einer axial verschiebbaren Hülse (34) mit einer komplementär konischen Außenfläche sitzt.

5. Lageranordnung nach einem der Ansprüche 1 bis 3, **dadurch gekennzeichnet, dass** der Innenring (42) des Radiallagers (38) auf einem drehbaren Exzenterring (48) sitzt.

6. Lageranordnung nach zumindest einem der Ansprüche 1 bis 5, **dadurch gekennzeichnet, dass** an dem Planetenrad (4) ein radial nach innen weisender Ringssteg (50) ausgebildet ist, dessen radial nach innen weisende Mantelfläche (52) sich auf der radial äußeren Mantelfläche (54) des Außenringes (13) des Radiallagers (12) abstützt.

7. Lageranordnung nach zumindest einem der Ansprüche 1 bis 6, **dadurch gekennzeichnet, dass** die beiden Kegelrollenlager (16, 18) und das mindestens eine Radiallager (20) einen gemeinsamen Außenring (22) aufweisen.

8. Lageranordnung nach zumindest einem der Ansprüche 1 bis 7, **dadurch gekennzeichnet, dass** die Lageranordnung Bestandteil einer Planetengetriebestufe einer Windturbinengetriebeanordnung ist.

## Claims

1. Bearing arrangement for the rotatable mounting of a planet gear (4) on a planet carrier (2), having two tapered-roller bearings (8, 10) arranged at an axial distance from one another, with at least one radial bearing (12) being arranged between the tapered-roller bearings (8, 10), with the at least one radial bearing (12) being a cylindrical-roller bearing, a needle-roller bearing or a ball bearing, **characterized in that** the inner bearing ring (32) of the radial bearing (30) is adjustable with regard to bearing play or bearing preload.

2. Bearing arrangement according to Claim 1, **characterized in that** the at least one radial bearing (12) or the plurality of radial bearings (12) at least substantially fills out or fill out the axial intermediate space between the tapered-roller bearings (8, 10).

3. Bearing arrangement according to Claim 1 or 2, **characterized in that** the tapered-roller bearings (8, 10) are designed and arranged such that the axes of rotation (17, 19) of the tapered rollers intersect between the tapered-roller bearings (8, 10) and radially within the raceways of the tapered rollers.

4. Bearing arrangement according to one of Claims 1 to 3, **characterized in that** the inner surface of the inner ring (32) of the radial bearing (30) is of conical design and is seated on an axially movable sleeve (34) with a complementary conical outer surface.

5. Bearing arrangement according to one of Claims 1 to 3, **characterized in that** the inner ring (42) of the radial bearing (38) is seated on a rotatable eccentric ring (48).

6. Bearing arrangement according to at least one of Claims 1 to 5, **characterized in that** a radially inwardly pointing annular web (50) is formed on the planet gear (4), the radially inwardly pointing lateral surface (52) of which web (50) is supported on the radially outer lateral surface (54) of the outer ring (13) of the radial bearing (12).

7. Bearing arrangement according to at least one of Claims 1 to 6, **characterized in that** the two tapered-roller bearings (16, 18) and the at least one radial bearing (20) have a common outer ring (22).

8. Bearing arrangement according to at least one of Claims 1 to 7, **characterized in that** the bearing arrangement is a constituent part of a planetary gear stage of a wind turbine gearbox arrangement.

## Revendications

1. Agencement de paliers pour le support rotatif d'une roue planétaire (4) sur un porte-satellites (2) comprenant deux paliers à rouleaux coniques (8, 10) disposés à distance axiale l'un de l'autre, au moins un palier radial (12) étant disposé entre les paliers à rouleaux coniques (8, 10), l'au moins un palier radial (12) étant un palier à rouleaux cylindriques, un palier à aiguilles ou un roulement à billes, **caractérisé en ce que** la bague de palier interne (32) du palier radial (30) peut être ajustée en termes de jeu de palier ou de précontrainte de palier.

2. Agencement de paliers selon la revendication 1, **caractérisé en ce que** l'au moins un palier radial (12) ou les plusieurs paliers radiaux (12) remplit ou remplissent au moins essentiellement l'espace intermédiaire axial entre les paliers à rouleaux coniques (8, 10).

3. Agencement de paliers selon la revendication 1 ou 2, **caractérisé en ce que** les paliers à rouleaux coniques (8, 10) son réalisés et disposés de telle sorte que les axes de rotation (17, 19) des rouleaux coniques se coupent entre les paliers à rouleaux coniques (8, 10) et radialement à l'intérieur des pistes de roulement des rouleaux coniques.

4. Agencement de paliers selon l'une quelconque des revendications 1 à 3, **caractérisé en ce que** la surface interne de la bague interne (32) du palier radial (30) est réalisée de manière conique et repose sur une douille déplaçable axialement (34) avec une surface extérieure complémentaire conique.

5. Agencement de paliers selon l'une quelconque des revendications 1 à 3, **caractérisé en ce que** la bague interne (42) du palier radial (38) repose sur une bague d'excentrique rotative (48).

6. Agencement de paliers selon au moins l'une quelconque des revendications 1 à 5, **caractérisé en ce qu'**une nervure annulaire (50) tournée radialement vers l'intérieur est réalisée sur la roue planétaire (4), et sa surface d'enveloppe (52) tournée radialement vers l'intérieur s'appuie sur la surface d'enveloppe radialement extérieure (54) de la bague extérieure (13) du palier radial (12).

7. Agencement de paliers selon au moins l'une quelconque des revendications 1 à 6, **caractérisé en ce que** les deux paliers à rouleaux coniques (16, 18) et l'au moins un palier radial (20) présentent une bague extérieure commune (22).

8. Agencement de paliers selon au moins l'une quelconque des revendications 1 à 7, **caractérisé en ce que** l'agencement de paliers fait partie d'un étage d'engrenages planétaires d'un agencement de transmission pour éoliennes.
